# EUROPÄISCHE PATENTANMELDUNG

(11) **EP 2 332 416 A2**
(43) Veröffentlichungstag der Anmeldung: **15.06.2011**
(21) Anmeldenummer: 10194737.2
(22) Anmeldetag: 13.12.2010
(51) Int. Cl.: A22C 11/10, A22C 11/12

(54) **Behandlungsvorrichtung für einen Wurststrang**

(30) Priorität: 14.12.2009 DE 102009058081
(71) Anmelder: HOWE Wurtswaren KG, 90451 Nürnberg (DE); Singer & Sohn GmbH, 92334 Berching (DE)
(72) Erfinder: Singer, Manfred, 92334, Berching (DE)
(74) Vertreter: Blaumeier, Jörg

(57) **Zusammenfassung**

Behandlungsvorrichtung für einen Wurststrang umfassend mehrere hintereinander angeordnete, über Abdrehungen voneinander getrennte Würste, umfassend ein den Wurststrang (5) förderndes Transportmittel (13) sowie wenigstens ein Heizmittel (14) zum Erwärmen zumindest der Bereiche der Abdrehungen (7) des mittels des Transportmittels (13) am Heizmittel (14) vorbei transportierten Wurststrangs (5).

## Beschreibung

Die Erfindung betrifft eine Behandlungsvorrichtung für einen Wurststrang umfassend mehrere hintereinander angeordnete, über Abdrehungen voneinander getrennte Würste.

Zur Herstellung von Würsten wird üblicherweise mittels einer Füllmaschine durch ein Füllrohr das Wurstbrät in eine schlauchförmige Wursthülle gepresst. Mittels eines Abdrehmechanismus werden die einzelnen Wurstportionen, also die einzelnen Wurststücke selber, gebildet, indem der Wurststrang gedreht wird, so dass sich der Strang lokal und unter Bildung einer Abdrehung einschnürt. Die einzelnen Wurstportionen sind also über solche Abdrehungen voneinander getrennt. Der auf diese Weise gebildete Wurststrang wird sodann mittels einer Vereinzelungsvorrichtung getrennt. Hierzu wird der Wurststrang von zwei Endlosförderbändern gegriffen, die den Wurststrang mit definierter Geschwindigkeit zu einer Schneideinrichtung transportieren, wo die einzelnen Würste im Bereich der Abdrehung getrennt werden. Die Abdrehung wird beispielsweise mittels zweier gegenläufig oder rotierender Messer, die zum Schnitt zusammenwirken, geschnitten, wobei eines der Messer auch als reiner Gegenhalter ausgeführt sein kann.

Bei vielen Wurstsorten wird als Wursthülle ein Naturdarm verwendet, also ein organisches Darmmaterial. Da es sich um ein natürliches Material handelt, weist es zwangsläufig keine homogene Dicke auf, vielmehr variiert die Materialdicke über die Darmlänge. Im Bereich der Abdrehungen, wo der Darm also zusammengedreht ist, ergibt sich zum einen ein relativ dicker Materialabschnitt, zum anderen kann dessen Dicke aufgrund unterschiedlicher Darmstärken von Abdrehung zu Abdrehung variieren. Auch ist das Darmmaterial sehr weich und elastisch. Diese Umstände bedingen, dass hohe Anforderungen an die Schneideinrichtung gestellt werden, das heißt, dass die Messer bzw. das Messer und der Gegenhalter extrem exakt und mit hoher Schneidkraft schneiden müssen, um die vollständige Durchtrennung sicherzustellen. Auch muss die Schneideinrichtung ohne weiteres in der Lage sein, unterschiedliche Abdrehungsdicken sicher trennen zu können.

Der Erfindung liegt das Problem zugrunde, eine Behandlungsvorrichtung anzugeben, die die Behandlung eines Wurststrangs derart ermöglicht, dass ein vereinfachtes Schneiden mittels einer nachgeschalteten Schneideinrichtung möglich ist.

Zur Lösung dieses Problems ist erfindungsgemäß eine Behandlungsvorrichtung vorgesehen, umfassend ein den Wurststrang förderndes Transportmittel sowie wenigstens ein Heizmittel zum Erwärmen zumindest der Bereiche der Abdrehungen des mittels des Transportmittels am Heizmittel vorbei transportierten Wurststrangs.

Die Erfindung sieht eine Behandlungsvorrichtung vor, die der thermischen Behandlung des Wurststrangs zumindest im Bereich der Abdrehungen, also des Bereichs, der mit der nachgeschalteten Schneideinrichtung zu bearbeiten ist, dient. Hierzu weist die Behandlungsvorrichtung, die beispielsweise der Abdrehvorrichtung nach- und der Schneidvorrichtung vorgeschaltet ist, ein Heizmittel auf, das der Erhitzung zumindest des Bereichs der Abdrehung dient. Das Heizmittel ist lokal feststehend angeordnet, der Wurststrang wird mittels des Transportmittels am Heizmittel mit hoher Geschwindigkeit (üblich sind mehrere Schnitte pro Sekunde) vorbeitransportiert. Während der Wurststrang bzw. die Abdrehungen am Heizmittel vorbeigefördert werden, wird über das Heizmittel möglichst viel Wärmeenergie insbesondere in den Bereich der Abdrehung eingetragen, so dass sich dieser Bereich möglichst schnell und möglichst stark erhitzt. Da es sich bei dem Hüllmaterial um wie einleitend beschrieben um organisches, natürliches Material, nämlich tierischen Darm handelt, führt eine hinreichend starke Erwärmung zu einer Veränderung des Materials respektive der Materialstruktur. Es kommt zu Koagulationsprozessen, das heißt, dass Eiweiß bzw. Proteine ihre Struktur verändern und koagulieren. Dieser Prozess setzt bei einer Temperatur üblicherweise oberhalb von 40° C ein. Hieraus wiederum resultiert eine gewisse Versprödung bzw. Verhärtung des Materials, das heißt, dass das Darmmaterial etwas versteift, mithin also nicht mehr derart flexibel ist, verglichen mit seinem Zustand ohne Temperaturbehandlung. Je schneller und höher der Energieeintrag, umso höher ist der Koagulationsgrad und umso größer der Grad der querschnittsmäßig gesehen einsetzenden Durchwärmung der Abtrennung. Im Idealfall wärmt die Abdrehung über im gesamten Querschnitt durch, so dass es über den gesamten Abdrehungsquerschnitt zu einer Versteifung bzw. Versprödung kommt.

Diese thermisch verursachte Materialveränderung, also die Versprödung bzw. Versteifung des Materials, führt dazu, dass sich das Darmmaterial über die Schneideinrichtung leichter trennen lässt, da es seine Flexibilität respektive Elastizität zumindest teilweise einbüßt. Ein spröderes Material lässt sich grundsätzlich leichter trennen, auch können dickere Abdrehungen ähnlich leicht getrennt werden wie dünnere Abdrehungen. Insgesamt bietet also die erfindungsgemäße Behandlungsvorrichtung die Möglichkeit, den Wurststrang derart thermisch zu behandeln, dass eine Materialveränderung des Hüllmaterials im Bereich der Abdrehung erreicht werden kann, die einem einfacheren Schneiden zuträglich ist.

Das Heizmittel kann in zwei unterschiedlichen Betriebsarten betrieben werden. Nach einer ersten Betriebsart kann das Heizmittel intermittierend arbeiten, das heißt, dass es lediglich dann arbeitet, wenn eine Abdrehung im Arbeitsbereich des Heizmittels ist. Es wird also quasi ein gepulster Betrieb vorgenommen. Dieser kann beispielsweise dann vorgenommen werden, wenn sichergestellt ist, dass der Abstand zwischen zwei Abdrehungen stets im Wesentlichen konstant ist. Denkbar ist es aber auch, dass die Behandlungsvorrichtung einer Erfassungseinrichtung nachgeschaltet ist, die den Wurststrang abtastet und ein Erfassungsergebnis liefert, aus welchem die Lage einer nachfolgend in den Arbeitsbereich des Heizmittels kommenden Abdrehung erfasst wird. In diesem Fall kann die Behandlungsvorrichtung durchaus auch in eine Vereinzelungsvorrichtung, die eine solche Erfassungseinrichtung und eine nachgeschaltete Schneideinrichtung aufweist, integriert werden, und zwar zwischen Erfassungs- und Schneideinrichtung. Eine solche Vereinzelungsvorrichtung ist in der deutschen Patentanmeldung DE 10 2009 058 080.8 der Anmelder, die gleichen Zeitrangs ist, beschrieben. Das Heizmittel wird dann in Abhängigkeit der Lageinformation über die konkrete Abdrehungsposition intermittierend angesteuert.

Alternativ zum intermittierenden Betrieb ist es natürlich auch denkbar, das Heizmittel kontinuierlich zu betreiben, also dem Wurststrang kontinuierlich Wärmeenergie zuzuführen. Das heißt, dass hierbei nicht nur die Abdrehung erwärmt wird, sondern grundsätzlich auch die einzelnen Würste thermisch behandelt werden. Dies führt dazu, dass es auch zu einer gewissen Beeinflussung des Hüllmaterials im Bereich einer Wurst selbst kommt. Jedoch ist dort die Erwärmung nicht allzu stark, da die Wärme vom anliegenden Wurstbrät aufgenommen respektive abgeführt wird. Unabhängig davon ist aber auch eine gewisse Versprödung des Hüllmaterials der Wurst selbst durchaus zweckmäßig, als hierüber eine gewisse, wenngleich geringe Versteifung der Wurst erzielt werden kann, die ein verbessertes Handling insbesondere nach der Vereinzelung der Wurst ermöglicht, da sich die Wurst nicht allzu sehr bzw. überhaupt nicht krümmt. Aus steuerungstechnischer Sicht ist selbstverständlich die kontinuierliche Betriebsweise die einfachere, insbesondere, als sie völlig unabhängig vom Abdrehungsabstand oder etwaigen Erfassungsergebnissen ist.

Das Heizmittel selbst kann eine einzelne Heizeinrichtung sein, denkbar ist aber auch, mehrere verteilt angeordnete, zusammenwirkende Heizeinrichtungen vorzusehen. Eine Heizeinrichtung kann länglich ausgeführt sein, sie ist seitlich neben dem daran vorbei transportierten Wurststrang angeordnet. Beispielsweise können zwei solcher länglicher Heizeinrichtungen einander gegenüberliegend angeordnet sein, um von beiden Seiten einen Wärmeeintrag zu ermöglichen. Neben einer länglichen Ausführung ist auch eine gebogene Ausführung denkbar, beispielsweise eine nahezu halbringförmige. Dies ermöglicht es, über zwei einander gegenüberliegende Heizeinrichtungen eine Ringform zu bilden, wobei durch diesen Ring der Wurststrang hindurchgezogen wird. Mit einer solchen Ausgestaltung ist eine nahezu umfängliche vollständige Temperaturbehandlung des Wurststrangs möglich. Daneben besteht natürlich die Möglichkeit, eine Heizeinrichtung grundsätzlich als einteiliges ringförmiges Bauteil auszuführen, durch welchen Ring der Wurststrang transportiert wird. Auch diese Ausgestaltung ermöglicht eine voll umfängliche thermische Behandlung, das heißt, dass der Temperatureintrag von allen Seiten erfolgt.

Eine Heizeinrichtung selbst kann nach einer ersten Erfindungsausgestaltung als Strahlungsheizer ausgeführt sein. Das heißt, dass die thermische Energie durch Strahlung in das Material eingetragen bzw. eingekoppelt wird. Als hierfür verwendbare Strahlung kann jedwede aus lebensmittelrechtlicher Sicht unbedenkliche Strahlung verwendet werden, bevorzugt Mikrowellen, Infrarotlicht oder Ultraviolettlicht. Das heißt, dass ein Strahlungsheizer einen entsprechenden Mikrowellengenerator oder eine Infrarot- oder Ultraviolettlichtleuchtquelle umfasst, die entsprechende elektromagnetische Wellen emittiert. Je nach Intensität der abgegebenen Strahlung kann selbstverständlich der Aufheizbetrieb entsprechend gesteuert werden, so dass über eine geeignete Steuerung gegebenenfalls auch die abgegebene bzw. eingekoppelte Wärmeenergie variiert und der Wurstart oder der Hüllmaterialart angepasst werden kann.

Alternativ zur Verwendung eines Strahlungsheizers kann auch ein Dampfheizer als Heizeinrichtung verwendet werden. Ein solcher Dampfheizer gibt heißen Dampf ab, beispielsweise Nassdampf, Sattdampf oder Heißdampf. Auch hierüber kann eine extrem schnelle Erhitzung auf Temperaturen oberhalb von 40° erreicht werden. Ein solcher Dampfheizer wird entweder mit Wasser gespeist und weist eine eigene Verdampfungseinrichtung auf, denkbar ist aber auch, dass dem Dampfheizer bereits der extern erzeugte Dampf zugeführt und lediglich noch abgegeben wird. Das heißt, dass die Dampferzeugungseinheit des Dampfheizers beabstandet angeordnet ist und lediglich die Abgabedüsen unmittelbar strangnah angeordnet sind.

Wie bereits beschrieben, kann die Behandlungsvorrichtung ohne weiteres in eine Vorrichtung zum Vereinzeln der Würste oder in eine Abdrehvorrichtung integriert sein. Ist sie als Teil einer Vereinzelungsvorrichtung vorgesehen, so ist sie dort in jedem Fall der Schneideinrichtung vorgeschaltet, sofern eine Erfassungseinrichtung zur Ermittlung der Position einer Abdrehung vorgesehen ist, die auch zur gegebenenfalls vorgesehenen intermittierenden Steuerung der Heizeinrichtung dient, ist diese Erfassungseinrichtung dann der Behandlungsvorrichtung vorgeschaltet. Ist sie in eine Abdrehvorrichtung integriert, so ist sie dem die eigentliche Abdrehung vornehmenden Geräteteil nachgeschaltet, befindet sich also quasi am Ausgang der Abdrehvorrichtung.

Daneben besteht selbstverständlich auch die Möglichkeit, die Behandlungsvorrichtung als stand-alone-Gerät auszuführen, mithin also mit einem eigenen Vorrichtungsgestell zu versehen, so dass sie als eigene Vorrichtung in eine Herstelllinie integriert werden kann, beispielsweise zwischen eine Abdrehvorrichtung und die nachfolgende Vereinzelungsvorrichtung gesetzt werden kann. Die Ausgestaltung als stand-alone-Gerät ermöglicht es, die Behandlungsvorrichtung nach Bedarf in die Fertigungslinie zu integrieren oder wieder zu entfernen.

Neben der erfindungsgemäßen Behandlungsvorrichtung betrifft die Erfindung ferner ein Verfahren zum Behandeln eines Wurststrangs umfassend mehrere hintereinander angeordnete, über Abdrehungen voneinander getrennte Würste. Dieses Verfahren zeichnet sich erfindungsgemäß dadurch aus, dass der Wurststrang mittels eines Transportmittels entlang eines oder durch ein Heizmittel transportiert wird, mittels welchem Heizmittel zumindest die Bereiche der Abdrehungen erhitzt werden, so dass das die Abdrehung bildende organische Material zumindest teilweise thermisch bedingt verändert wird.

Das Heizmittel kann intermittierend betrieben werden, um lokal lediglich die Abdrehungsbereiche zu erhitzen, alternativ kann das Heizmittel auch kontinuierlich betrieben und der gesamte Wurststrang erhitzt werden.

Ein verwendbares Heizmittel kann ein Strahlungsheizer sein, der aus lebensmittelrechtlicher Sicht unbedenkliche elektromagnetische Strahlung abgibt, beispielsweise Mikrowellen, Infrarotlicht oder Ultraviolettlicht, also Strahlung, die geeignet ist, das organische Material zu erhitzen. Alternativ zur Verwendung eines Strahlungsheizers kann das Heizmittel auch als Dampfheizer ausgeführt sein, der Heißdampf, Sattdampf oder Nassdampf abgibt. Auch hierüber kann ein sehr schneller, hoher Energieeintrag zur Erhitzung erreicht werden.

Eine weitere Erfindungsausgestaltung sieht vor, als Heizmittel ein Heißwasserbad zu verwenden, durch welches der Wurststrang gezogen wird. Die Temperatur des Wasserbades sollte möglichst hoch, bevorzugt nahe dem Siedepunkt, sein, so dass sich auch hierüber eine hinreichende Erhitzung erreicht lässt.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine erfindungsgemäße Behandlungsvorrichtung, integriert in eine Fertigungslinie zur Wurstherstellung,
- Fig. 2: eine vergrößerte Prinzipdarstellung der erfindungsgemäßen Behandlungsvorrichtung mit einem Heizmittel einer ersten Ausführungsform,
- Fig. 3: eine vergrößerte Prinzipdarstellung der erfindungsgemäßen Behandlungsvorrichtung mit einem Heizmittel einer zweiten Ausführungsform,
- Fig. 4: eine Vorderseitenansicht des Heizmittels aus Fig. 3,
- Fig. 5: eine Prinzipdarstellung mit einer erfindungsgemäßen Behandlungsvorrichtung, die in eine Vereinzelungsvorrichtung integriert ist, und
- Fig. 6: eine Prinzipdarstellung einer erfindungsgemäßen Behandlungsvorrichtung einer weiteren Ausführungsform.

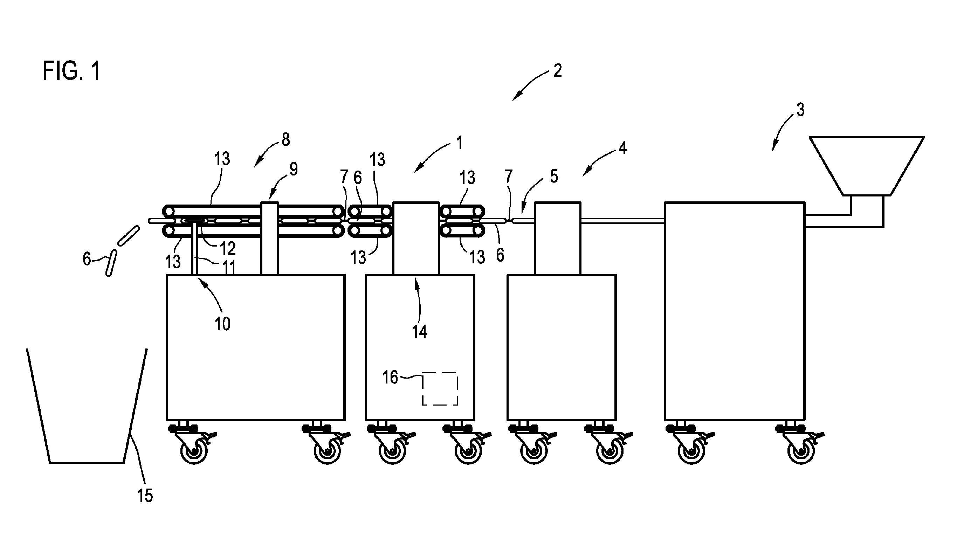

Fig. 1 zeigt eine erfindungsgemäße Behandlungsvorrichtung 1, die in eine Fertigungslinie 2 zur Herstellung von Würsten integriert ist. Vorgesehen ist zum einen eine Füllvorrichtung 3, die in an sich bekannter Weise Wurstbrät in ein Hüllmaterial aus tierischem Darm einpresst. Der Befüllvorrichtung 3 nachgeschaltet ist eine Abdrehvorrichtung 4, in der in ebenfalls bekannter Weise durch Rotation des befüllten Endlosstranges ein Wurststrang 5 mit einzelnen Würsten 6 gebildet wird, indem Abdrehungen 7, die die einzelnen Würste 6 voneinander trennen, erzeugt werden. Auch die Funktion einer solchen Abdrehvorrichtung ist hinlänglich bekannt.

Der Abdrehvorrichtung 4 nachgeschaltet ist die erfindungsgemäße Behandlungsvorrichtung 1, die der thermischen Behandlung des Wurststrangs 5 bzw. insbesondere der Abdrehungen 7 dient. Dieser Behandlungsvorrichtung 1 nachgeschaltet ist ferner eine Vereinzelungsvorrichtung 8, die im gezeigten Beispiel eine Erfassungseinrichtung 9 zur Erfassung der Lage der einzelnen Abdrehungen umfasst. Eine Möglichkeit einer Ausgestaltung einer solchen Erfassungseinrichtung 9 ist in ausführlicher Weise in der parallelen deutschen Patentanmeldung DE 10 2009 058 080.8 der Anmelder, die den gleichen Zeitrang wie die vorliegende Anmeldung genießt, beschrieben. Sie basiert auf einer linienförmigen Lichtquelle, die einen linienförmigen Lichtstrahl erzeugt, und einem linienförmig angeordneten Empfängerelemente aufweisenden Detektor, an dem ein beleuchtungsabhängiges Empfangssignal abgegriffen wird, das Grundlage für die Erfassung des Vorhandenseins einer Abdrehung ist. Der Beleuchtungsgrad des Detektors variiert abhängig davon, ob sich zwischen Lichtquelle und Detektor eine dicke Wurst oder eine dünne Abdrehung befindet, da zwangsläufig der Abschaltungsgrad des Detektors durch das dazwischen befindliche Wurst- oder Abdrehungsmaterial variiert.

Die Vereinzelungsvorrichtung 8 umfasst ferner eine Schneideinrichtung 10 umfassend zwei jeweils um eine vertikale Drehachse 11 rotierende Messer 12, wobei aber auch nur ein Messer 12 und auf der anderen Seite ein ebenfalls rotierender Gegenhalter vorgesehen sein kann. In jedem Fall wird die Schneideinrichtung 10 über eine Steuerungseinrichtung in Abhängigkeit des Erfassungsergebnisses der Erfassungseinrichtung 9 so angesteuert, dass der Schnitt exakt im Bereich der Abdrehung, bevorzugt deren Mitte, erfolgt. Der Wurststrang 5 ist an der Vereinzelungsvorrichtung zwischen zwei Endlosförderbändern 13 aufgenommen und geführt, er wird über diese transportiert.

Die erfindungsgemäße Behandlungsvorrichtung 1 umfasst im gezeigten Ausführungsbeispiel ebenfalls Endlosförderbänder 13, die hier paarweise angeordnet sind. Das in Fig. 1 rechte Paar der Endlosförderbänder 13 nimmt den Wurststrang 5 von der Abdrehvorrichtung 4 kommend auf. Zwischen den beiden Paaren an Endlosförderbändern 13 befindet sich ein Heizmittel 14, das entweder nur zum lokalen Erhitzen einer in seinem Arbeitsbereich befindlichen Abdrehung 7 oder zum Erhitzen des gesamten Wurststrangs 5, also der Würste 6 wie auch der Abdrehungen 7, dient. Über das Heizmittel wird möglichst viel Wärmeenergie in den entsprechenden Wurstbereich eingetragen, um diesen, insbesondere den Bereich der Abdrehungen 7, möglichst schnell auf eine hohe Temperatur, die wenigstens 40° C, jedoch deutlich mehr betragen sollte, zu erhitzen. Aus dieser starken Erwärmung des organischen, tierischen Darmmaterials resultiert eine Veränderung des Materials selbst, es kommt zu einer Eiweiß- oder Proteinkoagulation, die zu einer Verfestigung bzw. Versprödung des Darmmaterials führt. Die Erhitzung respektive der Energieeintrag sollte so sein, dass auch bzw. insbesondere der Bereich der Abdrehungen, wo zusammengedrehtes Darmmaterial mit einer Gesamtstärke von 1 oder mehreren Millimetern vorliegt, möglichst weit durchwärmt wird, so dass der Verhärtungs- oder Versprödungsgrad bezogen auf den Durchmesser möglichst groß ist. Das Darmmaterial im Bereich der Abdrehungen 7 büßt an Elastizität und Flexibilität ein, wird also etwas härter, spröder, je nachdem, wie stark der Grad der Denaturierung ist. Dieses veränderte Material lässt sich über die Schneideinrichtung 10 einfacher und exakter schneiden.

Sofern das Heizmittel 14, auf dessen konkrete Ausgestaltung nachfolgend noch eingegangen wird, kontinuierlich betrieben wird, wie es bei der hier in Fig. 1 gezeigten Ausführung der Behandlungsvorrichtung 1 als stand-alone-Gerät zweckmäßig ist, wird nicht nur das Darmmaterial im Bereich der Abdrehungen 7, sondern auch im Bereich der einzelnen Würste 6 erwärmt. Dies ist insofern nicht schädlich bzw. auch sogar zweckmäßig, als hierüber auch eine gewisse Verhärtung des die einzelnen Würste 6 einhüllenden Materials erfolgt, was für das nachfolgende Handling nach der Vereinzelung der einzelnen Würste 6, die im gezeigten Beispiel in eine Auffangwanne 15 fallen, ist. Im Falle eines intermittierenden Betriebs, wenn das Heizmittel also nur getaktet eingeschaltet wird, um nur dann Energie abzugeben respektive einzutragen, wenn sich eine Abdrehung 7 im Arbeitsbereich des Heizmittels 14 befindet, kann die Steuerung im Falle einer Ausführung als stand-alone-Gerät, wie in Fig. 1 gezeigt, derart sein, dass unter Annahme konstanter Wurstlängen, mithin also konstanter Abdrehungsabstände, der Pulsbetrieb gesteuert wird. Denkbar ist es aber auch, die Steuerung in Abhängigkeit des Betriebs der Abdrehvorrichtung 4 vorzunehmen. Der Betrieb der Abdrehvorrichtung 4 definiert bzw. bewirkt die Erzeugung einer Abdrehung 7. Hieraus kann letztlich ebenfalls Kenntnis darüber erlangt werden, wie die Position respektive die Abstände der einzelnen Abdrehungen 7 sind. Dies kann seitens einer hier nur gestrichelt gezeigten, bei jeder Ausführungsform vorgesehenen Steuerungseinrichtung 16, die den Betrieb des Heizmittels 14 steuert, verarbeitet werden, hierzu steht die Steuerungseinrichtung 16 mit einer nicht näher gezeigten Steuerungseinrichtung der Abdrehvorrichtung 4 in Kommunikationsverbindung.

Der über das Heizmittel 14 thermisch behandelte Wurststrang 5 wird sodann über das zweite Paar an Endlosförderbändern 13 aufgenommen und weitertransportiert, bis er in den Zugriffsbereich der Endlosförderbänder 13 der Vereinzelungsvorrichtung 8 gelangt. Es schließt sich nun (sofern vorgesehen) die Abdrehungserfassung über die Erfassungseinrichtung 9 an, in jedem Fall jedoch der Vereinzelungsvorgang durch Ansteuerung der Schneideinrichtung 10, wo sodann die verhärteten, versprödeten Abdrehungen 7 durchschnitten und die Würste 6 vereinzelt werden.

Das Heizmittel selbst umfasst eine oder mehrere separate Heizeinrichtungen. Das Heizmittel respektive die Heizeinrichtungen können entweder als Strahlungsheizer oder als Dampfheizer ausgeführt sein. Strahlungsheizer emittieren bevorzugt Mikrowellen, Infrarotlicht oder Ultraviolettlicht. Dampfheizer geben Heiß-, Satt- oder Nassdampf ab. Ein Strahlungsheizer umfasst einen entsprechende Mikrowellengenerator oder Leuchtquelle, die über eine geeignete Steuerungseinrichtung angesteuert wird. Im Falle einer Dampfheizerausführung ist ein Dampferzeuger vorgesehen, der den Dampf zu entsprechenden Düsen führt, die wurststrangnah positioniert sind. Dieser Dampferzeuger kann beispielsweise im Vorrichtungsgestell unterhalb der eigentlichen Heizeinrichtung respektive Düsen angeordnet sein. Denkbar ist es aber auch, die Dampferzeugung unmittelbar im Bereich der Düsen vorzunehmen.

Im Folgenden werden unterschiedliche Ausgestaltungen der Heizmittel respektive der Heizeinrichtungen diskutiert, wobei diese Ausgestaltungen sowohl für Ausführungen als Strahlungsheizer als auch für Dampfheizer gelten.

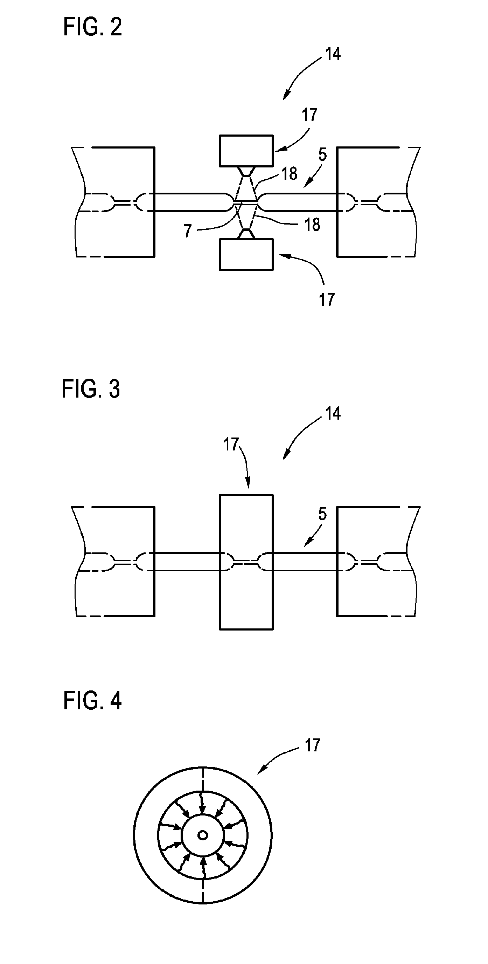

Fig. 2 zeigt das Heizmittel 14 in vergrößerter Darstellung. Bei dieser Ausgestaltung sind zwei Heizeinrichtungen 17 vorgesehen, die gemäß der in Fig. 2 gezeigten Aufsicht auf die Behandlungsvorrichtung 1 seitlich benachbart zum Wurststrang 5 angeordnet sind. Die Heizeinrichtungen 17 stehen vorzugsweise vertikal und liegen einander gegenüber. Im gezeigten Ausführungsbeispiel befindet sich eine Abdrehung 7 im Arbeitsbereich der beiden Heizeinrichtungen 17, wie durch die gestrichelten Fächer 18 gezeigt, erfolgt die thermische Behandlung der Abdrehung 7. Je nach Betrieb wird das Heizmittel 14 nun zugeschaltet, wenn die Abdrehung 7 im Arbeitsbereich ist, es erfolgt also ein intermittierender Betrieb. Werden Strahlungsheizer verwendet, erfolgt also ein gepulster Betrieb oder ein Blitzbetrieb. Im Falle der Verwendung von Dampfheizern werden intermittierende Dampfstöße abgegeben. Sofern der gesamte Wurststrang 5, also auch die einzelnen Würste 6, behandelt wird, ist das Heizmittel 14 kontinuierlich in Betrieb.

Handelt es sich bei den Heizeinrichtungen 17 um Strahlungsheizer, so verfügt jede Heizeinrichtung 17 über eine geeignete Strahlungsquelle respektive einen entsprechenden Generator bzw. - sofern eine gemeinsame Strahlungsquelle oder ein gemeinsamer Generator vorgesehen ist - über entsprechende Verbindungen zu diesem zentralen Erzeugungsmittel. Die Mikrowellen respektive die IR- oder UV-Strahlung wird sodann über entsprechende Öffnungen oder dergleichen in Form der Fächer 18 abgegeben.

Handelt es sich bei den Heizeinrichtungen 17 um Dampfheizer, so weist jede Heizeinrichtung entsprechende Düsen auf, über die der heiße Dampf, wiederum dargestellt durch die Fächer 18, abgegeben wird. Die Heizeinrichtungen 17 können entsprechende Leitungen umfassen, die zu einem zentralen Dampferzeuger führen, sofern der Dampf nicht seitens der jeweiligen Heizeinrichtung 17 erzeugt wird. Die Steuerung - ob Strahlungsheizer oder Dampfheizer - erfolgt jeweils über die vorrichtungseigene Steuerungseinrichtung 16.

Die Figuren 3 und 4 zeigen ein weiteres Ausführungsbeispiel eines Heizmittels 14. Es weist lediglich eine Heizeinrichtung 17 auf, die hier als geschlossener Ring ausgeführt ist. Durch dieses ringförmige Heizelement 17 wird der Wurststrang 5 gezogen, wie insbesondere in Fig. 4 gezeigt ist. Die Wärmeenergie wird, siehe Fig. 4, symmetrisch von allen Seiten auf den Wurststrang 5 oder, sofern lediglich die Abdrehungen 7 behandelt werden, nur auf die Abdrehungen 7 appliziert. Dies ist in Fig. 4 durch die geschlängelten Pfeile angedeutet. Wiederum kann es sich bei der Heizeinrichtung 17 entweder um einen Strahlungsheizer oder einen Dampfheizer handeln.

Wenngleich in den Figuren 3 und 4 ein einteiliges ringförmiges Heizelement 17 gezeigt ist, besteht die Möglichkeit, die Ringform auch mittels zweier separater, länglicher, jedoch gebogener Heizelemente 17 zu bilden. Dies ist in Fig. 4 durch die beiden vertikalen gestrichelten Linien angedeutet. Die beiden Heizelemente 17 können beidseits des Wurststrangs 5 angeordnet und ihren Enden möglichst aneinander geordnet werden, so dass sich eine vorzugsweise geschlossene Ringform ergibt.

An dieser Stelle ist darauf hinzuweisen, dass die Figuren lediglich Prinzipskizzen darstellen, selbstverständlich sind die einzelnen Heizmittel respektive Heizeinrichtungen über entsprechende Halterungen und Ähnliches am nicht näher gezeigten Vorrichtungsgestell angeordnet, es sind entsprechende Verbindungs- und Steuerleitungen vorgesehen etc.

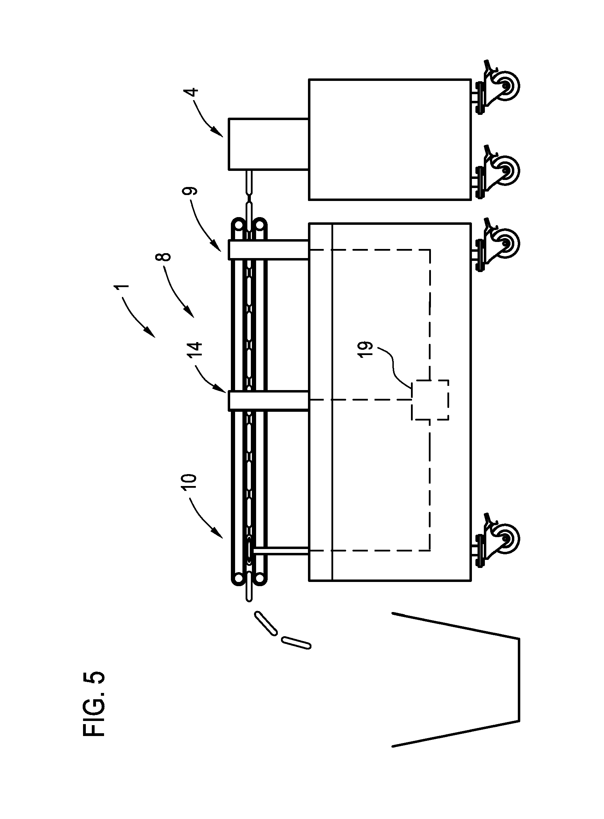

Fig. 5 zeigt ein Ausführungsbeispiel einer erfindungsgemäßen Behandlungsvorrichtung 1, die im gezeigten Beispiel in eine Vereinzelungsvorrichtung 8, wie sie beispielsweise bereits in Fig. 1 beschrieben ist, integriert wurde. Die Behandlungsvorrichtung 1 ist hier also kein stand-alone-Gerät mehr. Ersichtlich befindet sich die Behandlungsvorrichtung 1 zwischen der hier vorgesehenen Erfassungseinrichtung 9 und der Schneideinrichtung 10, wobei wie bereits ausgeführt eine Erfassungseinrichtung 9 nicht zwingend erforderlich ist. Die zentrale Steuerungseinrichtung 19, die hier nur gestrichelt gezeigt ist, kann sowohl den Betrieb der Behandlungsvorrichtung 1 als auch der Schneideinrichtung 10 steuern. Der Betrieb der Schneideinrichtung 10 ist ohnehin intermittierend in Abhängigkeit der über die Erfassungseinrichtung 9 erfassten Abdrehungslage. Der Betrieb der Behandlungsvorrichtung 1, also des Heizmittels 14, kann kontinuierlich sein, oder ebenfalls intermittierend, so dass nur die Abdrehungen 7 behandelt werden.

Wenngleich nicht näher dargestellt, besteht alternativ hierzu auch die Möglichkeit, die Behandlungsvorrichtung 1 nebst Heizmittel 14 als Teil der Abdrehvorrichtung 4 vorzusehen bzw. dortseits zu integrieren.

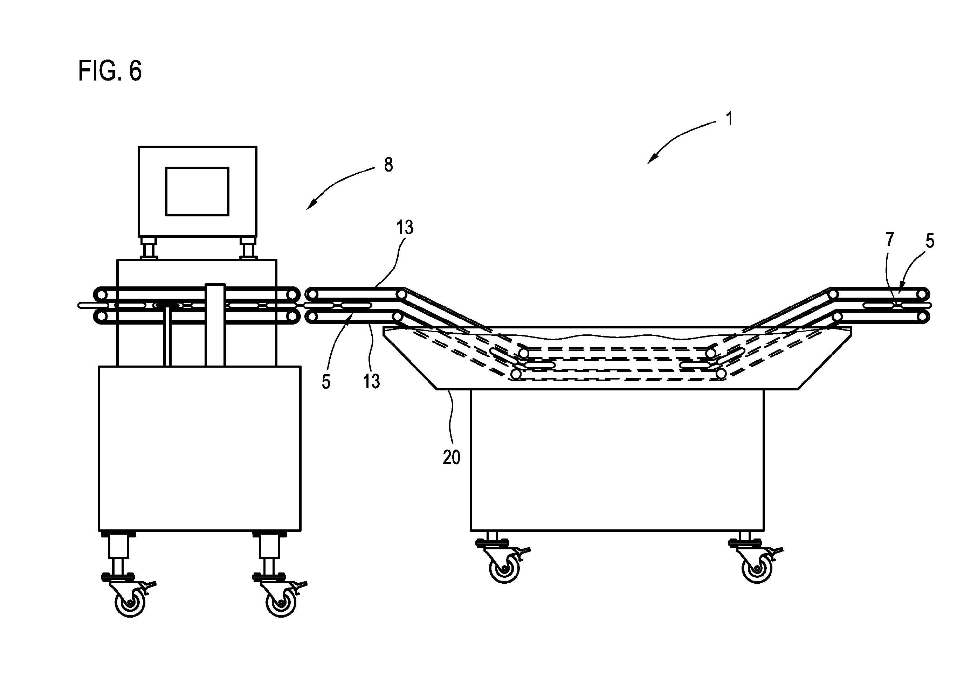

Fig. 6 zeigt schließlich eine Behandlungsvorrichtung 1 in Form eines Wasserbads 20, welche Behandlungsvorrichtung 1 der Vereinzelungsvorrichtung 8 vorgeschaltet ist. Der von der Abdrehvorrichtung 4 kommende Wurststrang 5 wird über zwei weitere Endlosförderbänder 13 durch das Wasserbad 20, das Wasser mit einer Temperatur bevorzugt nahe des Siedepunkts enthält, gefördert. Je nach Badlänge und Förderdauer stellt sich eine ausreichende Erwärmung insbesondere im Bereich der Abdrehungen 7 ein. Es kommt auch hierbei zur Versprödung respektive Versteifung.

## Patentansprüche

1. Behandlungsvorrichtung für einen Wurststrang umfassend mehrere hintereinander angeordnete, über Abdrehungen voneinander getrennte Würste, umfassend ein den Wurststrang (5) förderndes Transportmittel (13) sowie wenigstens ein Heizmittel (14) zum Erwärmen zumindest der Bereiche der Abdrehungen (7) des mittels des Transportmittels (13) am Heizmittel (14) vorbei transportierten Wurststrangs (5).

2. Behandlungsvorrichtung nach Anspruch 1, **dadurch gekennzeichnet, dass** das Heizmittel (14) intermittierend, gegebenenfalls in Abhängigkeit des Erfassungsergebnisses einer den Wurststrang (5) abtastenden Erfassungseinrichtung (9), oder kontinuierlich betreibbar ist.

3. Behandlungsvorrichtung nach Anspruch 1 oder 2, **dadurch gekennzeichnet, dass** das Heizmittel (14) eine einzelne Heizeinrichtung (17) oder mehrere verteilt angeordnete, zusammenwirkende Heizeinrichtungen (17) umfasst.

4. Behandlungseinrichtung nach Anspruch 3, **dadurch gekennzeichnet, dass** eine Heizeinrichtung (17) länglich, gegebenenfalls auch gebogen, ausgeführt ist und seitlich neben dem daran vorbei transportierten Wurststrang (5) angeordnet ist, oder dass eine Heizeinrichtung (17) ringförmig ausgeführt ist, wobei der Wurststrang (17) durch die Heizeinrichtung (17) transportiert wird.

5. Behandlungsvorrichtung nach Anspruch 3 oder 4, **dadurch gekennzeichnet, dass** eine Heizeinrichtung (17) als Strahlungsheizer ausgebildet ist.

6. Behandlungsvorrichtung nach Anspruch 5, **dadurch gekennzeichnet, dass** der Strahlungsheizer Mikrowellen, Infrarotlicht oder Ultraviolettlicht emittiert.

7. Behandlungsvorrichtung nach Anspruch 3 oder 4, **dadurch gekennzeichnet, dass** eine Heizeinrichtung (17) als Dampfheizer ausgebildet ist.

8. Behandlungsvorrichtung nach Anspruch 7, **dadurch gekennzeichnet, dass** der Dampfheizer Nassdampf, Sattdampf oder Heißdampf abgibt.

9. Behandlungsvorrichtung nach einem der vorangehenden Ansprüche, **dadurch gekennzeichnet, dass** sie in eine Vorrichtung (8) zum Vereinzeln der Würste oder in eine Abdrehvorrichtung (4) integriert ist.

10. Verfahren zum Behandeln eines Wurststrangs umfassend mehrere hintereinander angeordnete, über Abdrehungen voneinander getrennte Würste, **dadurch gekennzeichnet, dass** der Wurststrang mittels eines Transportmittels entlang eines oder durch ein Heizmittel transportiert wird, mittels welchem Heizmittel zumindest die Bereiche der Abdrehungen erhitzt werden, so dass das die Abdrehung bildende organische Material zumindest teilweise thermisch bedingt verändert wird.

11. Verfahren nach Anspruch 10, **dadurch gekennzeichnet, dass** das Heizmittel intermittierend betrieben wird, um lokal die Abdrehungsbereiche zu erhitzen, oder dass das Heizmittel kontinuierlich betrieben und der gesamte Wurststrang erhitzt wird.

12. Verfahren nach Anspruch 10 oder 11, **dadurch gekennzeichnet, dass** das Heizmittel Mikrowellen, Infrarotlicht oder Ultraviolettlicht abstrahlt.

13. Verfahren nach Anspruch 10 oder 11, **dadurch gekennzeichnet, dass** das Heizmittel Heiß-, Satt- oder Nassdampf abgibt.

14. Verfahren nach Anspruch 10, **dadurch gekennzeichnet, dass** als Heizmittel ein Heißwasserbad verwendet wird.
